# EUROPEAN PATENT APPLICATION

(11) **EP 4 400 021 A1**
(43) Date of publication of application: **17.07.2024**
(21) Application number: 22866679.8
(22) Date of filing: 08.09.2022
(51) Int. Cl.: A47L 11/24, A47L 11/40

(54) **CLEANING SYSTEM AND BASE STATION**

(30) Priority: 08.09.2021 CN 202111051121; 08.09.2021 CN 202122162728 U
(71) Applicant: Positec Power Tools (Suzhou) Co., Ltd., Suzhou, Jiangsu 215123 (CN)
(72) Inventor: QIAN, Fu, Suzhou, Jiangsu 215123 (CN); ZHANG, Shisong, Suzhou, Jiangsu 215123 (CN); ZHONG, Hongfeng, Suzhou, Jiangsu 215123 (CN); PAN, Yu, Suzhou, Jiangsu 215123 (CN); YANG, Fan, Suzhou, Jiangsu 215123 (CN)
(74) Representative: Kilburn & Strode LLP
(86) International application number: PCT/CN2022/117706
(87) International publication number: WO 2023/036216

(57) **Abstract**

The present invention discloses a cleaning system and a base station. In a working process, an airflow is generated by a drawing apparatus, to draw garbage on the ground on a traveling path into a dust box. Before the airflow entering the dust box is discharged outside a cleaning robot, the airflow flows through an air filter, and dust carried by the airflow is filtered out under a filtering function of the air filter. When dust accumulation in the air filter needs to be cleaned or the dust box needs to be emptied, the air filter is driven by a cleaning apparatus to vibrate, so as to shake off dust in the air filter, and the garbage in the dust box is collected by using a collecting apparatus of the base station, so that a requirement for removing the dust in the air filter and emptying the garbage in the dust box is implemented, and a problem that an air volume of the cleaning robot decreases due to the dust accumulation in the air filter is effectively solved. Therefore, cleaning efficiency of the cleaning robot is ensured.

## Description

### Technical Field

The present invention relates to the technical field of a cleaning apparatus, and in particular, to a cleaning system and a base station.

### Background Technology

A HEPA (High Efficiency Particulate Air Filter), commonly known as a HEPA, is a high-efficiency air filter, and is mainly configured to capture particulate dust and various suspended solids that are larger than 0.5 µm. A dust box of a cleaning robot is usually configured with the HEPA. When garbage is drawn into the dust box, the HEPA is configured to filter out dust in the dust box, to prevent the dust from entering a room.

When more dust accumulates in the HEPA, if the HEPA is not cleaned, dust removal efficiency of the HEPA decreases. The HEPA is usually cleaned in a manual cleaning manner. For example, the dust box is removed, and then the HEPA is removed. The dust is removed through cleaning by using water or removed by using a tool. Finally, the HEPA and the dust box are assembled and mounted into the cleaning robot. However, in this dust removal manner, the dust is raised in a process of removing the HEPA, and causes secondary pollution and dirties a hand. The washed HEPA needs to be dried before use. As a result, user experience is affected.

### SUMMARY

Based on this, it is necessary to provide a cleaning system and a base station. The cleaning system satisfies a requirement for automatic dust removal, to effectively solve a problem that an air volume of a cleaning robot decreases due to dust accumulation in an air filter, and ensure cleaning efficiency of the cleaning robot.

The base station satisfies a requirement of the cleaning robot for automatic dust removal, to effectively solve the problem that the air volume of the cleaning robot decreases due to the dust accumulation in the air filter, and ensure the cleaning efficiency.

Technical solutions thereof are as follows.

A cleaning system is provided. The cleaning system includes a cleaning robot, including a body; a drawing apparatus, disposed inside the body and configured to generate an airflow, to draw garbage on the ground on a traveling path of the cleaning robot; a dust box, disposed inside the body and configured to collect the garbage, where the airflow flows through the dust box and is discharged outside the cleaning robot; the cleaning system further includes an air filter, disposed inside the dust box and configured to filter out dust in the airflow that is in the dust box and that is discharged outside the cleaning robot; a cleaning apparatus, where the cleaning apparatus can vibrate the air filter to shake off the dust in the air filter; and the cleaning system further includes a base station for the cleaning robot to stop, where the base station is configured to at least collect the garbage in the dust box, the base station includes a collecting apparatus, and the collecting apparatus is docked with the dust box to collect the garbage in the dust box.

In the foregoing cleaning system, in a working process, the cleaning robot generates the airflow by using the drawing apparatus, to draw the garbage on the ground on the traveling path into the dust box. Before the airflow entering the dust box is discharged outside the cleaning robot, the airflow flows through the air filter, and the dust carried by the airflow is filtered out under a filtering function of the air filter. When the dust in the air filter needs to be cleaned, the air filter is driven by the cleaning apparatus to vibrate, so as to shake off the dust in the air filter, so that a requirement of the air filter for automatic dust removal is implemented, and a problem that an air volume of the cleaning robot decreases due to dust accumulation in the air filter is effectively solved. Therefore, cleaning efficiency of the cleaning robot is ensured. The dust dropping from the air filter needs to be collected to the base station, so that the dropping dust does not adhere to the air filter again when the cleaning robot is used again. Simultaneously, when there is much garbage in the dust box, impact is caused on an effect of vibrating the air filter by the cleaning apparatus. When the base station collects the garbage in the dust box, the impact is reduced. In addition, the air filter is also vibrated when the base station collects the garbage in the dust box, so that an effect of cleaning the air filter is improved.

In one of the embodiments, running duration of the cleaning apparatus at least partially coincides with running duration of the collecting apparatus.

In one of the embodiments, the cleaning apparatus and the collecting apparatus are configured to be simultaneously started, and the cleaning apparatus and the collecting apparatus are shut down after preset duration.

In one of the embodiments, the collecting apparatus is configured to be started after the cleaning apparatus is started for preset duration.

In one of the embodiments, the cleaning apparatus is configured to be started after the collecting apparatus is started for preset duration.

In one of the embodiments, docking detection units are respectively disposed on the cleaning robot and the base station. The docking detection unit is configured to detect whether a dust collection port of the dust box is successfully docked with a collection port of the base station. When the dust collection port and the collection port are successfully docked, the collecting apparatus of the base station starts to collect the garbage in the dust box.

In one of the embodiments, the docking detection units include electrode plates that are respectively disposed on the cleaning robot and the base station and that cooperate with each other. The electrode plates are further configured to charge the cleaning robot via the base station. When the electrode plates of the cleaning robot and the base station are successfully docked, the collecting apparatus starts to collect the garbage in the dust box.

In one of the embodiments, the cleaning robot is configured to return to the base station when completing a cleaning task, to enable the garbage in the dust box to be collected by the base station.

In one of the embodiments, the collecting apparatus is configured to generate a negative pressure in the base station to draw the garbage in the dust box into the base station. A collection airflow formed by the negative pressure acts on the cleaning apparatus and drives the cleaning apparatus to move.

In one of the embodiments, the collecting apparatus includes a first fan. The first fan generates the collection airflow. The cleaning apparatus includes a knocking apparatus disposed inside the dust box. The knocking apparatus includes a knocking hammer. The knocking hammer can be driven by the collection airflow generated by the first fan and move between an initial position and a knocking position. The knocking hammer knocks on the air filter when moving to the knocking position.

In one of the embodiments, the cleaning apparatus is disposed inside the body.

In one of the embodiments, the cleaning apparatus includes a vibration motor. The vibration motor is connected to the air filter and transmits vibration generated by vibration motor to the air filter.

In one of the embodiments, a sealing vibration absorber is disposed between the air filter and the dust box. The sealing vibration absorber reduces vibration transmitted by the air filter to the dust box and prevents the airflow from flowing out of the dust box without passing through the air filter.

In one of the embodiments, the cleaning apparatus includes a swinging member, a driving motor, and a driving component. One end of the air filter is pivoted and connected to the dust box via the swinging member, and the other end is connected to the dust box via a second elastic apparatus. The driving motor drives the driving component to move. Movement of the driving component drives the air filter to generate vibration on the second elastic apparatus.

In one of the embodiments, the cleaning apparatus includes a collision motor and a collision component that is connected to the collision motor. The collision motor drives at least a part of a structure of the collision component to move between an extended position and a retracted position. The collision component collides the air filter when the collision component is at the extended position.

In one of the embodiments, the collision component includes a collision block, a pushing member, and an elastic member. The pushing member is connected to the collision motor and driven by the collision motor to rotate. The pushing member is configured to push, when the pushing member rotates, the collision block to move from the extended position to the retracted position. The elastic member is configured to apply elastic force to the collision block when the collision block is at the retracted position, to push the collision block out to the extended position.

In one of the embodiments, the collision motor and the collision component are disposed outside the dust box.

In one of the embodiments, the cleaning apparatus is disposed between the drawing apparatus and the air filter, and is located on a path through which the airflow flows.

A cleaner is provided. The cleaner includes a body; a drawing apparatus, disposed inside the body and configured to generate an airflow, to draw garbage on a to-be-cleaned surface; a dust box, disposed inside the body and configured to collect the garbage, where the airflow flows through the dust box and is discharged outside the cleaner; an air filter, disposed inside the dust box and configured to filter out dust in the airflow that is in the dust box and that is discharged outside the cleaner; and a cleaning apparatus, where the cleaning apparatus can vibrate the air filter to shake off the dust in the air filter.

In a working process, the foregoing cleaner generates the airflow by using the drawing apparatus, to draw garbage on the ground on a traveling path into the dust box. Before the airflow entering the dust box is discharged outside of the cleaner, the airflow flows through the air filter, and the dust carried by the airflow is filtered out under a filtering function of the air filter. When the dust in the air filter needs to be cleaned, the air filter is driven by the cleaning apparatus to vibrate, so as to shake off the dust in the air filter, so that a requirement of the air filter for automatic dust removal is implemented, and a problem that an air volume of the cleaner decreases due to dust accumulation in the air filter is effectively solved. Therefore, cleaning efficiency of the cleaner is ensured.

A base station is provided. The base station is configured to at least collect garbage in a dust box of a cleaning robot. The cleaning robot includes an air filter. The air filter is disposed inside the dust box. A cleaning apparatus is disposed in the base station. The cleaning apparatus can vibrate the air filter to shake off dust in the air filter.

When a certain amount of dust is accumulated in the air filter of the cleaning robot, the cleaning robot moves to the base station, to cooperate with the base station. In this case, the air filter is driven by the cleaning apparatus in the base station to vibrate, so as to shake off the dust in the air filter, so that a requirement of the air filter for automatic dust removal is implemented, and a problem that an air volume of the cleaning robot decreases due to dust accumulation in the air filter is effectively solved. Therefore, cleaning efficiency of the cleaning robot is ensured.

In one of the embodiments, the cleaning apparatus includes a third motor and a rotation member that is driven by the third motor to rotate. More than two first magnetic members are mounted on the rotation member at intervals. A second magnetic member corresponding to the first magnetic member is mounted on the air filter. The first magnetic member and the second magnetic member attract and/or repel each other in a process in which the rotation member rotates. The air filter is mounted inside the dust box via a third elastic apparatus.

In one of the embodiments, the cleaning apparatus includes a fourth motor and a knocking structure that is driven by the fourth motor to rotate. The knocking structure knocks on the dust box when rotating. The air filter is mounted inside the dust box via a fourth elastic apparatus. Vibration generated when the knocking structure knocks on the dust box is transmitted to the air filter via the fourth elastic apparatus.

### BRIEF DESCRIPTION OF THE DRAWINGS

The accompanying drawings constituting a part of this application are used to provide a further understanding of the present invention. Example embodiments of the present invention and descriptions thereof are used to explain the present invention, and do not constitute an improper limitation of the present invention.

To describe the technical solutions in embodiments of the present invention more clearly, the following briefly describes the accompanying drawings required for describing embodiments. It is clear that the accompanying drawings in the following descriptions show merely some embodiments of the present invention, and a person of ordinary skill in the art may still derive other drawings from these accompanying drawings without creative efforts.

In addition, the accompanying drawings are not drawn on a scale of 1:1, and a relative size of each element is drawn in the accompanying drawings only by way of example and not necessarily on a true scale.
FIG. 1 is a schematic diagram of an overall structure of a cleaning system according to an embodiment of the present invention;
FIG. 2 is a top view of the overall structure of the cleaning robot described in FIG. 1;
FIG. 3 is a schematic diagram of a bottom structure of the cleaning robot described in FIG. 1;
FIG. 4 is a schematic diagram of a cooperation structure between a base station that uses a drawing mode and a cleaning robot according to an embodiment of the present invention;
FIG. 5 is a first working flowchart in which a collecting apparatus of a base station cooperates with a cleaning apparatus according to an instance of the present invention;
FIG. 6 is a second working flowchart in which a collecting apparatus of a base station cooperates with a cleaning apparatus according to an instance of the present invention;
FIG. 7 is a third working flowchart in which a collecting apparatus of a base station cooperates with a cleaning apparatus according to an instance of the present invention;
FIG. 8 is a schematic diagram of a structure of a cleaning apparatus when a knocking hammer is at a knocking position according to an embodiment of the present invention;
FIG. 9 is a schematic diagram of a structure of a cleaning apparatus when a knocking hammer is at an initial position according to an embodiment of the present invention;
FIG. 10 is a schematic diagram of a structure of a cleaning apparatus in which a brush board is used according to an embodiment of the present invention;
FIG. 11 is a schematic diagram of a structure of a hand-held vacuum cleaner according to an embodiment of the present invention;
FIG. 12 is a schematic diagram of an internal structure of the hand-held vacuum cleaner described in FIG. 11;
FIG. 13 is a sectional view of the structure of the hand-held vacuum cleaner described in FIG. 11;
FIG. 14 is a schematic diagram of a structure of a hand-held vacuum cleaner when garbage is to be drawn according to an embodiment of the present invention;
FIG. 15 is a schematic diagram of a structure of a hand-held vacuum cleaner after drawing according to an embodiment of the present invention;
FIG. 16 is a schematic diagram of a structure of a hand-held vacuum cleaner during dust removal according to an embodiment of the present invention;
FIG. 17 is a schematic diagram of a structure of a hand-held vacuum cleaner when garbage is to be removed according to an embodiment of the present invention;
FIG. 18 is a schematic diagram of a work procedure of a hand-held vacuum cleaner according to an embodiment of the present invention;
FIG. 19 is an exploded view of a cleaning apparatus in which a vibration motor is used according to an embodiment of the present invention;
FIG. 20 is a schematic diagram of a structure of a cleaning apparatus in which a vibration motor is used according to an embodiment of the present invention;
FIG. 21 is a schematic diagram 1 of a structure of a cleaning apparatus in which a cam is used according to an embodiment of the present invention;
FIG. 22 is a schematic diagram 2 of a structure of a cleaning apparatus in which a cam is used according to an embodiment of the present invention;
FIG. 23 is a schematic diagram of a structure of a cleaning apparatus in which a first gear and a second gear are used according to an embodiment of the present invention;
FIG. 24 is a schematic diagram of a cooperation structure between a base station that include a first magnetic member and a cleaning robot according to an embodiment of the present invention;
FIG. 25 is a schematic diagram of a structure of a cleaning apparatus in which a second magnetic member is used according to an embodiment of the present invention;
FIG. 26 is a schematic diagram of a cooperation structure between a base station that uses a knocking structure and a cleaning robot according to an embodiment of the present invention;
FIG. 27 is a schematic diagram of a structure of the cleaning apparatus described in FIG. 26;
FIG. 28 is an exploded view of a cleaning apparatus in which a collision motor is used according to an embodiment of the present invention;
FIG. 29 is a sectional view of the cleaning apparatus described in FIG. 28;
FIG. 30a is a schematic diagram when a collision component in the cleaning apparatus described in FIG. 28 is at an extended position;
FIG. 30b is a schematic diagram when the collision component in the cleaning apparatus described in FIG. 28 is at a retracted position; and
FIG. 31 is a schematic diagram of a bottom view of a cleaning robot according to an embodiment of the present invention.

Descriptions of reference numerals:
100: cleaning robot; 110: body; 111: dust box; 1111: foam; 1112: first housing; 1113: second housing; 1114: notch; 1116: dust inlet; 1117: flow inlet; 1118: dust collection port; 1119: sealing film; 1120: sealing vibration absorber; 1121: dust box top cover; 112: electrode plate; 113: heat insulation panel; 120: walking module; 121: walking wheel; 122: universal wheel; 130: sweeping module; 131: side brush; 132: rolling brush; 140: mopping module; 150: third fan; 200: base station; 210: main frame; 211: air channel; 220: receiving box; 230: first fan; 240: base; 241: collection port; 300: air filter; 310: filter body; 311: accommodation cavity; 320: mounting housing; 330: second magnetic member; 340: first elastic apparatus; 341: second elastic apparatus; 342: third elastic apparatus; 343: fourth elastic apparatus; 344: fifth elastic apparatus; 345: sixth elastic apparatus; 346: seventh elastic apparatus; 350: chute; 400: cleaning apparatus; 410: knocking apparatus; 411: knocking hammer; 4111: knocking part; 412: flip plate; 413: first reset member; 4131: reset torsion spring; 420: first motor; 421: eccentric structure; 430: vibration motor; 431: vibration bracket; 432: vibration motor cover; 433: wire collector; 434: motor mounting part; 440: driving motor; 441: swinging member; 442: driving component; 4421: cam; 4422: first gear; 4423: second gear; 4424: sliding block; 450: third motor; 451: rotating member; 452: first magnetic member; 460: fourth motor; 461: knocking structure; 470: brush board; 471: bristle; 472: second reset member; 473: guide rail; 500: hand-held vacuum cleaner; 510: outer shield; 511: opening; 520: second fan; 530: sensing component; 540: nozzle component; 550: power supply module; 560: indicator; 600: garbage; 700: dust; 810: collision component mounting bracket; 8101: collision through groove; 8102: flow outlet; 811: collision motor; 812: elastic member; 813: collection block; 8131: collision surface; 8132: driven surface; 814: pushing member; 8141: first surface; 8142: second surface; 8143: release surface; 8144: guide surface; 815: collision component housing; 820: sealing vibration member; 821: anti-clogging member; 822: sealing strip; 823: spring; 830: pressure plate; 841: third magnetic member; 842: fourth magnetic member; 851: first Hall element; 852: second Hall element; 860: filter mounting bracket; 90: dust inlet air channel; and D: rotation direction.

### DETAILED DESCRIPTION

The following describes embodiments of the present invention in detail with reference to the accompanying drawings.

To make the foregoing objectives, features, and advantages of the present invention more clearly and easily understood, specific implementations of the present invention are described in detail below with reference to the accompanying drawings. Many specific details are described in the following descriptions to fully understand the present invention. However, the present invention can be implemented in many other manners different from those described herein, and a similar improvement can be made by a person skilled in the art without departing from the connotation of the present invention, so that the present invention is not limited by specific embodiments disclosed below.

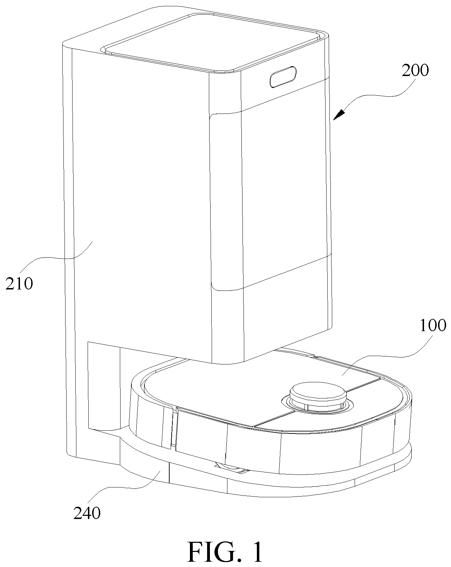

Refer to FIG. 1 to FIG. 4. In an embodiment, a cleaning system is provided. The cleaning system includes a cleaning robot 100, including a body 110; a drawing apparatus, disposed inside the body 110 and configured to generate an airflow, to draw garbage 600 on the ground on a traveling path of the cleaning robot 100; a dust box 111, disposed inside the body 110 and configured to collect the garbage, where the airflow flows through the dust box 111 and is discharged outside the cleaning robot 100; the cleaning system further includes an air filter 300, disposed inside the dust box 111 and configured to filter out dust in the airflow that is in the dust box 111 and that is discharged outside the cleaning robot 100; a cleaning apparatus 400, where the cleaning apparatus 400 can vibrate the air filter 300 to shake off the dust in the air filter 300; and the cleaning system further includes a base station 200 for the cleaning robot 100 to stop, where the base station 200 is configured to at least collect the garbage in the dust box 111, the base station 200 includes a collecting apparatus, and the collecting apparatus is docked with the dust box 111 to collect the garbage in the dust box 111.

In the foregoing cleaning system, in a working process, the cleaning robot 100 generates the airflow by using the drawing apparatus, to draw the garbage on the ground on the traveling path into the dust box 111. Before the airflow entering the dust box 111 is discharged outside the cleaning robot 100, the airflow flows through the air filter 300, and the dust carried by the airflow is filtered out under a filtering function of the air filter 300. When the dust in the air filter 300 needs to be cleaned, the air filter 300 is driven by the cleaning apparatus 400 to vibrate, so as to shake off the dust in the air filter 300, so that a requirement of the air filter 300 for automatic dust removal is implemented, and a problem that an air volume of the cleaning robot 100 decreases due to dust accumulation in the air filter 300 is effectively solved. Therefore, cleaning efficiency of the cleaning robot 100 is ensured. The dust dropping from the air filter 300 needs to be collected to the base station 200, so that the dust dropping in the dust box 111 does not adhere to the air filter 300 again when the cleaning robot 100 is used again. Simultaneously, when there is much garbage in the dust box 111, impact is caused on an effect of vibrating the air filter 300 by the cleaning apparatus 400. When the base station 200 collects the garbage in the dust box 111, the impact is reduced. In addition, the air filter 300 is also vibrated when the base station 200 collects the garbage in the dust box 111, so that an effect of cleaning the air filter 300 is improved.

When an amount of garbage in the dust box 111 reaches a certain amount, a user can collect the garbage in the dust box 111 by using the base station 200, to manage the garbage in a unified manner. In addition, a step of manually cleaning the dust box 111 by the user is skipped, so that a hand of the user is not dirtied. The base station 200 in this embodiment is configured to at least collect the garbage in the dust box 111. It should be understood that the base station 200 can not only collect the garbage drawn into the dust box 111, but also collect sundries in another structure, for example, the dust dropping from the air filter 300. The base station 200 may further provide another service for the cleaning robot 100, for example, charging, replacing a mopping module, or replenishing cleaning liquid in a water tank.

It needs to be noted that the vibration generated by the air filter 300 when the air filter 300 is driven by the cleaning apparatus 400 needs to include vibration caused by direct driving and/or vibration caused by indirect driving. "Vibration caused by direct driving" means that when the cleaning apparatus 400 operates, the air filter 300 is directly forced, resulting in up and down vibration of a structure of the air filter 300. "Vibration caused by indirect driving" means that when the cleaning apparatus 400 operates, a connection structure between the air filter 300 and the dust box 111 is driven to deform or move, so as to drive the air filter 300, so that the air filter 300 is in a vibrating state in the dust box 111. In addition, the cleaning apparatus 400 has a plurality of types of designs, which are not specifically limited in this embodiment, provided that the air filter 300 can vibrate under action of the cleaning apparatus 400. Meanwhile, the air filter 300 may be designed as a HEPA.

It needs to be noted that the cleaning robot 100 in this embodiment is a self-moving device, and a structure of the cleaning robot 100 further includes a walking module 120, a sweeping module 130, and a mopping module 140. The walking module 120, the sweeping module 130, and the mopping module 140 are all disposed at the bottom of the body 110. The walking module 120 is configured to drive the cleaning robot 100 to move along the traveling path. The sweeping module 130 is configured to sweep the ground. The mopping module 140 is configured to mop the ground.

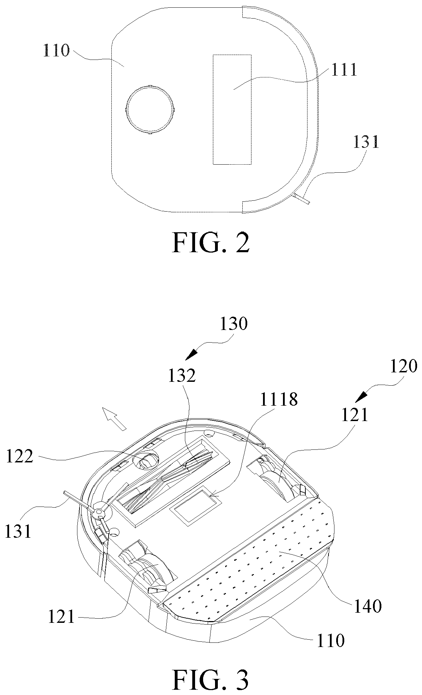

Specifically, refer to FIG. 3. The walking module 120 includes walking wheels 121 respectively disposed on a left side and a right side along a traveling direction and a universal wheel 122 disposed at the bottom of the body 110. The walking wheel 121 may be a self-driving wheel or a wheel driven by matched power. The sweeping module 130 includes a side brush 131 and a rolling brush 132 that are disposed at the bottom of the body 110. In addition, the mopping module 140 may include a structure such as a rag or a sponge body, to mop the ground.

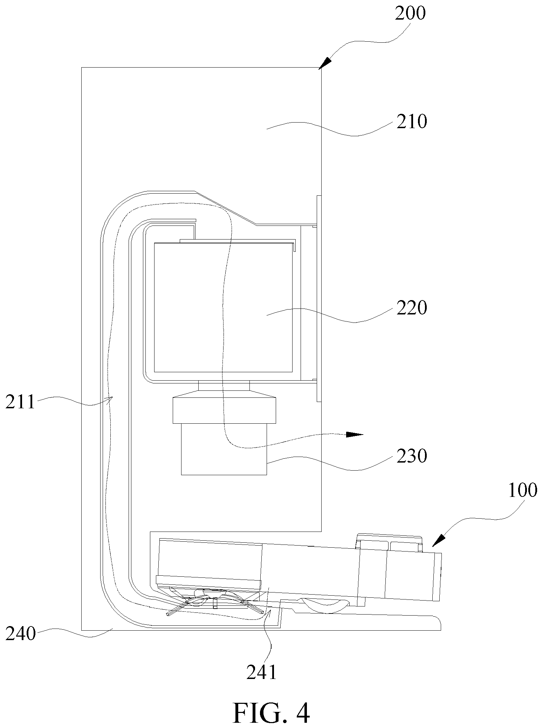

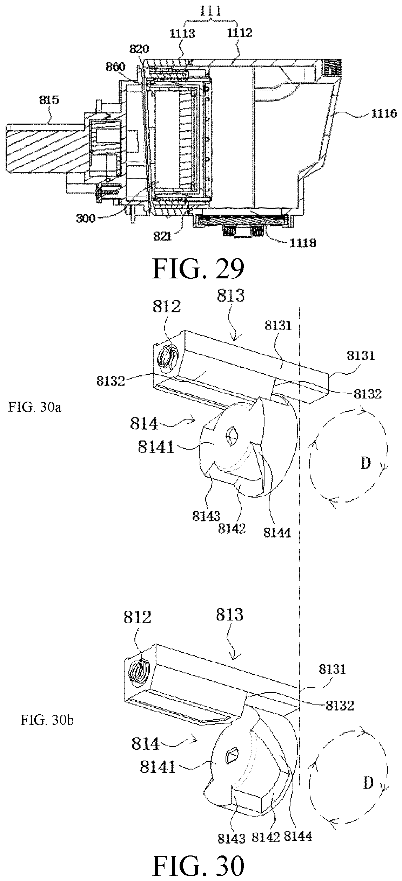

In one embodiment, refer to FIG. 4 and FIG. 29. The cleaning robot 100 is configured to return to the base station 200 when completing a cleaning task, to enable the garbage in the dust box 111 to be collected by the base station 200. That the cleaning robot 100 completes a cleaning task may be that the cleaning robot 100 completes full-house cleaning or cleans an area based on a setting of a user. For example, it is set by the user that the cleaning robot 100 completes a cleaning task when the cleaning robot 300 completes cleaning a room or several rooms. For another example, a hand-held device (such as a mobile phone) has a map of a to-be-cleaned surface, and the user delimits an area on the map in the hand-held device. The cleaning robot 100 completes a cleaning task when the cleaning robot 300 completes cleaning the area. Then, the cleaning robot 100 returns to the base station 200, so that the base station 200 collects the garbage in the dust box 111. The base station 200 receives a signal indicating that the cleaning robot 100 completes a cleaning task, and the collecting apparatus of the base station 200 starts to collect the garbage in the dust box 111. It may be understood that the cleaning robot is configured to communicate with the base station and transmit information between each other. A manner of mutual communication can be a local area network such as Bluetooth or WIFI. The cleaning robot stores the map of the to-be-cleaned surface, and the cleaning robot plans a cleaning path based on the map to complete cleaning the to-be-cleaned surface. When the cleaning robot traverses the to-be-cleaned surface based on the planned path, it is deemed that the cleaning robot completes full-house cleaning, that is, completing a cleaning task. Similarly, when a user delimits an area for cleaning, the cleaning robot can traverse the area based on a preset path, or re-plan a path to traverse the area. When the cleaning robot traverses the area, it is deemed that the cleaning robot completes a cleaning task.

In one embodiment, docking detection units are respectively disposed on the cleaning robot 100 and the base station 200. The docking detection unit is configured to detect whether a dust collection port 1118 of the dust box is successfully docked with a collection port 241 of the base station. When the dust collection port 1118 and the collection port 241 are successfully docked, the collecting apparatus of the base station 200 starts to collect the garbage in the dust box 111. In this embodiment, the base station 200 is further configured to charge the cleaning robot 100. Electrode plates that cooperate with each other are respectively disposed on the cleaning robot 100 and the base station 200. When the electrode plates of the cleaning robot 100 and the base station 200 are successfully docked, the collecting apparatus of the base station 200 starts to collect the garbage in the dust box 111. That is, whether the dust collection port 1118 and the collection port 241 are successfully docked is determined based on whether the electrode plates of the cleaning robot 100 and the base station 200 are successfully docked. Therefore, whether the dust collection port 1118 and the collection port 241 are successfully docked is determined without adding an additional component, and cost is lower. Certainly, another detection element is alternatively used to detect whether the cleaning robot stops at a correct position, so that the dust collection port and the collection port are correctly docked. For example, an infrared or ultrasonic generator is disposed on one of the cleaning robot and the base station, and an infrared or ultrasonic receiver is disposed on the other of the cleaning robot and the base station. When the infrared or ultrasonic receiver receives a signal, it is determined that the cleaning robot stops at the correct position. For example, a touch switch is disposed on one of the cleaning robot and the base station, and when the robot stops at the correct position, the touch switch is triggered.

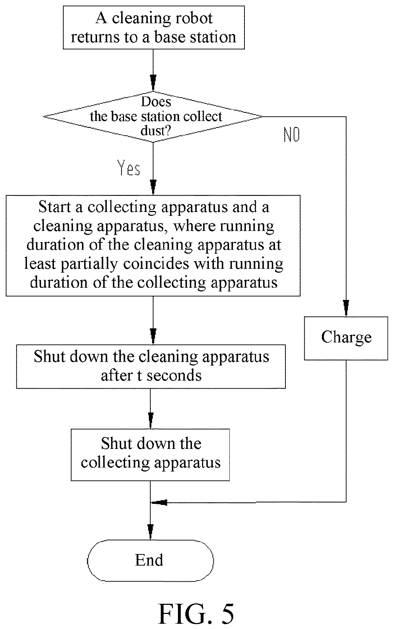

In one embodiment, when the cleaning apparatus is disposed inside the cleaning robot, running duration of the cleaning apparatus may be any duration. Preferably, when the cleaning robot returns to the base station for dust collection, the dust collection port and the collection port are successfully docked, so that the collecting apparatus is started to collect the garbage in the dust box. When the cleaning robot receives a signal indicating that the base station completes garbage collection, the cleaning apparatus is started to clean the dust in the air filter. When the base station receives a signal indicating that the air filter is completely cleaned, the collecting apparatus is started again to collect the garbage in the dust box. The garbage in the dust box is first collected by using the base station, so that remaining space in the dust box can be enlarged, and the effect of cleaning the air filter by the cleaning apparatus is further improved. An objective of starting the collecting apparatus again is to collect the dust dropped from the air filter to the base station, and ensure that all the garbage in the dust box is emptied. In one embodiment, the running duration of the cleaning apparatus 400 at least partially coincides with running duration of the collecting apparatus. Refer to FIG. 5. When the cleaning robot 100 returns to the base station 200, whether the cleaning robot 100 needs to collect dust is determined. If not, the base station 200 provides a charging service for the cleaning robot 100. If yes, the collecting apparatus 400 needs to be run for duration, and the cleaning apparatus 400 is also run for duration during the duration at which the collecting apparatus is run, so that the running duration of the cleaning apparatus 400 at least partially coincides with the running duration of the collecting apparatus. In this way, the base station 200 generates vibration to the air filter 300 when collecting the garbage in the dust box 111. The vibration is combined with the vibration that is of the air filter 300 and that is caused by the cleaning apparatus 400, to further improve vibration efficiency of the air filter 300 and improve a cleaning effect of the air filter 300. In addition, a voice generated when the base station 200 collects the garbage in the dust box 111 can cover a voice generated when the cleaning apparatus 400 vibrates the filter, so that a user does not suffer noise jamming for a plurality of times. After the cleaning apparatus 400 keeps running for duration t, the cleaning apparatus 400 and the collecting apparatus are shut down.

Further, the cleaning apparatus 400 and the collecting apparatus are simultaneously started, and the cleaning apparatus 400 and the collecting apparatus are shut down after preset duration. When the cleaning apparatus 400 and the collecting apparatus are simultaneously started, the vibration generated by the cleaning apparatus 400 and the vibration generated by the collecting apparatus can be combined to a greater extent and applied to the air filter 300, so that the effect of cleaning the air filter 300 is better. When the cleaning apparatus 400 and the collecting apparatus are shut down, the cleaning apparatus 400 is first shut down, and then the collecting apparatus is shut down after duration. Alternatively, the collecting apparatus is first shut down, and then the cleaning apparatus 400 is shut down after duration. Alternatively, the cleaning apparatus 400 and the collecting apparatus are simultaneously shut down.

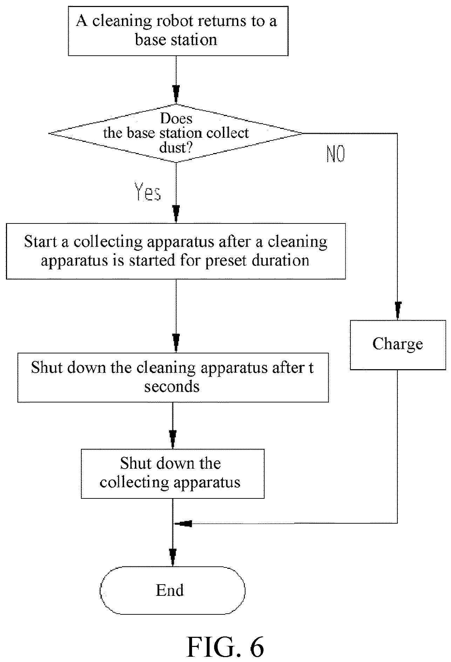

In another embodiment, refer to FIG. 6. The collecting apparatus is started after the cleaning apparatus 400 is started for preset duration. In this way, the garbage in the dust box 111, including the dust in the air filter 300, can be collected to the base station 200 once.

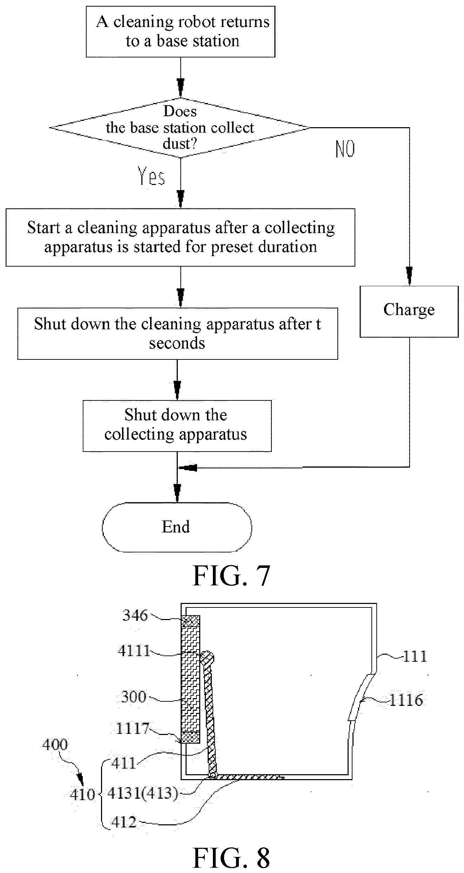

In another embodiment, refer to FIG. 7. The cleaning apparatus 400 is started after the collecting apparatus is started for preset duration. In this way, the garbage in the dust box 111 is first collected to the base station 200, so that a large amount of garbage in the dust box 111 does not affect an effect of vibrating the air filter 300 by the cleaning apparatus 400. Further, after the cleaning apparatus 400 is started to shake off the dust in the air filter 300, the collecting apparatus is started again to collect the garbage in the dust box 111, or the collecting apparatus is started again after the cleaning robot 100 continues to work.

Further, the collecting apparatus is configured to generate a negative pressure in the base station 200 to draw the garbage in the dust box 111 into the base station 200. A collection airflow formed by the negative pressure acts on the cleaning apparatus 400 and drives the cleaning apparatus 400 to move. The collecting apparatus of the base station 200 is linked with the cleaning apparatus 400. The collecting apparatus generates the negative pressure in the base station 200 to draw the garbage in the dust box 111. The negative pressure generated by the collecting apparatus forms the collection airflow to carry the garbage in the dust box 111 into the base station 200. The collection airflow simultaneously acts on the air filter 300, causing vibration on the air filter 300, to shake off the dust. The vibration is combined with the vibration generated by the air filter 300 when the air filter 300 is driven by the cleaning apparatus 400, thereby improving the effect of cleaning the air filter 300.

Further, refer to FIG. 4. The collecting apparatus includes a first fan 230. The first fan 230 generates the collection airflow to draw the garbage in the dust box 111 into the base station 200.

The cleaning apparatus 400 includes a knocking apparatus 410 disposed inside the dust box 111. The knocking apparatus 410 includes a knocking hammer 411. The knocking hammer 411 can be driven by the collection airflow generated by the first fan 230 and move between an initial position and a knocking position. The knocking hammer 411 knocks on the air filter 300 when moving to the knocking position. It can be learned that, in a central dust collection process, the first fan 230 is started to generate the collection airflow, so as to drive the knocking hammer 411 to move from the knocking position to the initial position. Then, the first fan 230 is shut down. In this case, the knocking hammer 411 moves from the initial position to the knocking position again due to loss of drawing force, so that the knocking hammer 411 knocks on the air filter 300. As a result, the air filter 300 vibrates due to knocking, to ensure that the dust is stably shaken off from the air filter 300 and collected to the base station 200 along with the collection airflow. In this way, the first fan 230 of the base station 200 is used in this embodiment, to complete collecting of the garbage and a dust removal operation, thereby greatly improving the cleaning efficiency of the cleaning robot 100.

It needs to be noted that a manner in which the knocking hammer 411 moves between the initial position and the knocking position may be, but is not limited to, a swing manner, an up-down manner, a left-right translation manner, or the like.

It further needs to be noted that, when the first fan 230 stops running, the knocking hammer 411 may move from the initial position to the knocking position again in a self-driving manner. For example, when the knocking hammer 411 moves to the initial position, the knocking hammer 411 abuts against an inner wall of the dust box 111 in a manner of inclining toward the air filter 300, that is, a gravity center of the knocking hammer 411 is biased toward the air filter 300. When the first fan 230 stops running, the knocking hammer 411 moves to the hammering position again because the gravity center is biased toward the air filter 300, and knocks on the air filter 300. Certainly, the knocking hammer 411 alternatively moves to the knocking position again in a passive driving manner. For example, a resetting structure is disposed between the knocking hammer 411 and the dust box 111, so that the knocking hammer returns to the knocking position or the like when the drawing force is lost.

In another embodiment, the cleaning apparatus 400 may alternatively be disposed on the base station 200. Alternatively, a part of the cleaning apparatus 400 is disposed on the base station 200 and the other part is disposed on the body 110. When the cleaning robot 100 moves into the base station 200, the part that is of a structure and that is located on the base station 200 and the part that is of the structure and that is located on the body 110 operate together to vibrate the air vibrator. In addition, when the cleaning apparatus 400 is disposed on the base station 200, or is partially disposed on the base station 200, the structure of the cleaning apparatus 400 is not limited to a structure design such as the knocking hammer 411. For example, the cleaning apparatus 400 may be designed as a structure of combining a motor and a cam 4421, or may be designed as a structure of combining a motor and a magnet. This is not listed one by one, provided that the cleaning apparatus 400 can drive the air filter 300 to vibrate when the cleaning apparatus 400 operates. For the structure of combining the motor and the cam 4421 and the structure of combining the motor and the magnet, respectively refer to cleaning apparatus 400 in corresponding embodiments of the cleaning apparatus.

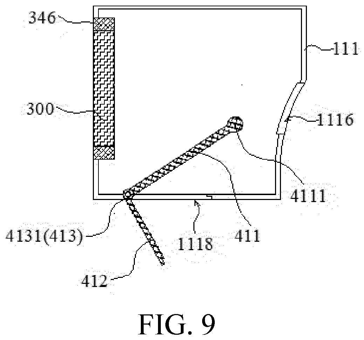

In one embodiment, refer to FIG. 8 and FIG. 9. The cleaning apparatus 400 further includes a first reset member 413. When the first fan 230 stops running, the knocking hammer 411 moves from the initial position to the knocking position under action of the first reset member 413, so that knocking force of the knocking hammer 411 on the air filter 300 can be effectively ensured, and the dust can be stably shaken off from the air filter 300.

Alternatively, the first reset member 413 may be, but is not limited to, a spring, a torsion spring, elastic rubber, an elastic metal sheet, or the like.

Specifically, refer to FIG. 8 and FIG. 9. The first reset member 413 is a reset torsion spring 4131. The knocking hammer 411 is rotationally connected to the inner wall of the dust box 111. The reset torsion spring 4131 is disposed on the knocking hammer 411 or the dust box 111. One end of the reset torsion spring 4131 is connected to the knocking hammer 411, and the other end is connected to the dust box 111. When the knocking hammer 411 swings from the knocking position to the initial position, the reset torsion spring 4131 is deformed by force. In this case, when the first fan 230 stops running, the knocking hammer 411 is swung rapidly from the initial position to the knocking position by elastic force of the reset torsion spring 4131, and forcefully knocks on the air filter 300.

Further, refer to FIG. 8 and FIG. 9. The cleaning apparatus 400 further includes a flip plate 412 disposed on the knocking hammer 411. The dust collection port 1118 for the collection airflow to flow from the dust box 111 to the base station 200 is disposed in the dust box 111. When the knocking hammer 411 moves to the initial position the flip plate 412 opens the dust collection port 1118, so that the garbage in the dust box 111 is collected to the base station 200 under action of the collection airflow. When the knocking hammer 411 moves to the knocking position, the flip plate 412 closes the dust collection port 1118, so that the garbage in the dust box 111 is not spilled. Simultaneously, when the knocking hammer 411 moves to the knocking position, the flip plate 412 closes the dust collection port 1118, so that the collection airflow forms a negative pressure effect around the flip plate 412. Therefore, the flip plate 412 can more easily drive the knocking hammer 411 to move to the initial position, and better store force for next knocking.

Further, refer to FIG. 8. A knocking part 4111 is disposed on one end of the knocking hammer 411. The flip plate 412 is connected to one end that is of the knocking hammer 411 and that is away from the knocking part 4111, and is disposed in a manner of connecting the knocking hammer 411. A connection part between the flap plate 412 and the knocking hammer 411 is rotationally connected to the inner wall of the dust box 111. The reset torsion spring 4131 is disposed between the connection part and the inner wall of the dust box 111.

Specifically, refer to FIG. 8. The flip plate 412 is disposed perpendicularly to the knocking hammer 411.

In one embodiment, refer to FIG. 8. A flow inlet 1117 and a dust inlet 1116 are disposed in the dust box 111. The airflow generated by the drawing apparatus can successively flow through the dust inlet 1116, the dust box 111 and the flow inlet 1117. The air filter 300 is embedded on an inner wall of the flow inlet 1117, so that it can be effectively ensured that the airflow discharged outside the cleaning robot 100 is filtered.

Refer to FIG. 8. It needs to be noted that, to facilitate the knocking of the knocking hammer 411 on the air filter 300, the flow inlet 1117 is disposed adjacent to the dust collection port 1118. For example, the dust collection port 1118 is disposed at the bottom of the dust box 111, and the flow inlet 1117 is disposed at a side surface that is of the dust box 111 and that is near the bottom of the dust box 111. In other words, in this case, the air filter 300 is disposed laterally inside the dust box 111.

Further, refer to FIG. 8. The cleaning system further includes a seventh elastic apparatus 346. The air filter 300 is connected to the inner wall of the flow inlet 1117 via the seventh elastic apparatus 346. In this case, when the knocking hammer 411 knocks on the air filter 300, the seventh elastic apparatus 346 is elastically deformed by force. As a result, the air filter 300 vibrates in the dust box 111, so that the dust is shaken off.

Optionally, the seventh elastic apparatus 346 may be, but is not limited to, elastic rubber, elastic plastic, a spring, or the like. When the fourth elastic apparatus 343 is a spring, a sealing film 1119 structure further needs to be added between the air filter 300 and the inner wall of the flow inlet 1117, to prevent air leakage between the air filter 300 and the inner wall of the flow inlet 1117.

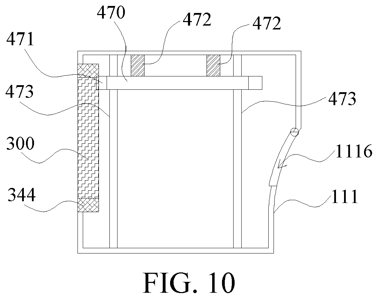

In another embodiment, refer to FIG. 10. The cleaning apparatus 400 includes a brush board 470. A bristle 471 that abuts against a surface of the air filter 300 is disposed on the brush board 470. The bristle 471 can be driven by the collection airflow generated by the first fan 230 to move back and forth on the surface of the air filter 300, so as to scrape the dust in the air filter 300 into the dust box 111.

Further, refer to FIG. 10. The cleaning apparatus 400 includes a guide rail 473. The guide rail 473 is disposed inside the dust box 111 and extends parallel to the surface of the air filter 300. The brush board 470 is movably mounted on the guide rail 473, so that the guide rail 473 guides a movement path of the brush board 470 in the dust box 111, and smooth movement of the brush board 470 under action of the first fan 230 is ensured. Therefore, a dust removal effect of the air filter 300 is improved.

Further, refer to FIG. 10. The cleaning apparatus 400 further includes a second reset member 472. When the first fan 230 stops running, the brush board 470 moves to an initial position under action of the second reset member 472, so that the brush board 470 is used in subsequent dust removal. Simultaneously, the cleaning system further includes a fifth elastic apparatus 344. The air filter 300 is connected to the inner wall of the dust box 111 via the fifth elastic apparatus 344. In this case, when the brush board 470 sweeps the air filter 300, the fifth elastic apparatus 344 is elastically deformed by force. As a result, the air filter 300 also vibrates in the dust box 111, so that the dust is shaken off.

Alternatively, the second reset member 472 may be, but is not limited to, a spring, elastic rubber, or the like. Simultaneously, the fifth elastic apparatus 344 may be, but is not limited to, elastic rubber, elastic plastic, or the like.

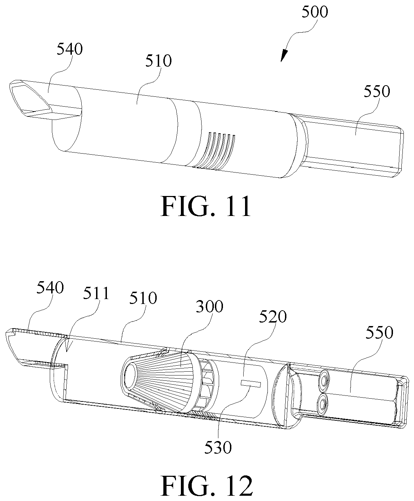

In one embodiment, refer to FIG. 2 and FIG. 11. A cleaner is provided. The cleaning apparatus 400 includes a body 110; a drawing apparatus, disposed inside the body 110 and configured to generate an airflow, to draw garbage on a to-be-cleaned surface; a dust box 111, disposed inside the body 110 and configured to collect the garbage, where the airflow flows through the dust box 111 and is discharged outside the cleaning apparatus 400; an air filter 300, disposed inside the dust box 111 and configured to filter out dust in the airflow that is in the dust box 111 and that is discharged outside the cleaning apparatus 400; and the cleaning apparatus 400, where the cleaning apparatus 400 can vibrate the air filter 300 to shake off the dust in the air filter 300.

In a working process, the foregoing cleaner generates the airflow by using the drawing apparatus, to draw garbage on the ground on a traveling path into the dust box 111. Before the airflow entering the dust box 111 is discharged outside the cleaner, the airflow flows through the air filter 300, and the dust carried by the airflow is filtered out under a filtering function of the air filter 300. When the dust in the air filter 300 needs to be cleaned, the air filter 300 is driven by the cleaning apparatus 400 to vibrate, so as to shake off the dust in the air filter 300, so that a requirement of the air filter 300 for automatic dust removal is implemented, and a problem that an air volume of the cleaning apparatus 400 decreases due to dust accumulation in the air filter 300 is effectively solved. Therefore, cleaning efficiency of the cleaning apparatus 400 is ensured.

It needs to be noted that, the cleaner can be designed as products of a plurality of different form. For example, the cleaner may be designed as a hand-held vacuum cleaner 500, or may be designed as a self-moving cleaning robot 100. Meanwhile, the air filter 300 may be designed as a HEPA.

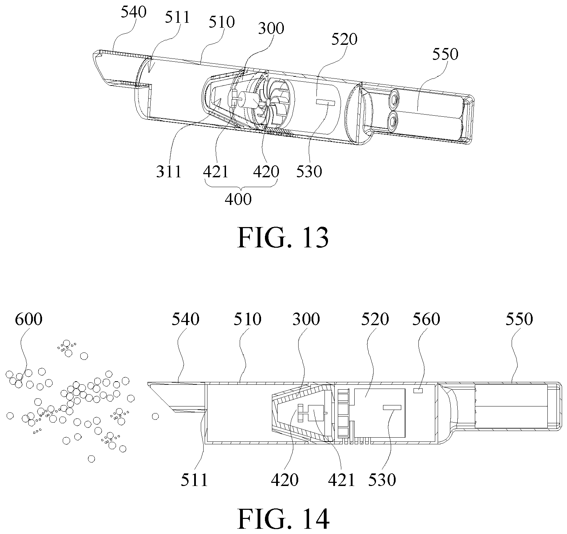

Further, refer to FIG. 12 and FIG. 13. The cleaner is a hand-held vacuum cleaner 500. The cleaning apparatus 400 is disposed inside the body 110 and mounted on the air filter 300. In this way, the cleaning apparatus 400 can more easily act on the air filter 300, so that the air filter 300 generates effective vibration, and it is ensured that the dust 700 is more effectively shaken off.

Further, refer to FIG. 12. The body 110 includes an outer shield 510. The drawing apparatus includes a second fan 520 disposed inside the outer shield 510. The second fan 520 can create a negative pressure environment inside the outer shield 510, to generate an airflow. An opening 511 for the airflow to enter is disposed on the outer shield 510. Refer to FIG. 14 to FIG. 17. It can be learned that, in a dust collection process, the second fan 520 is started to perform drawing inside the outer shield 510, so that the negative pressure environment is created inside the outer shield 510. Therefore, the airflow enters the outer shield 510 from the opening 511 of the outer shield 510, and is filtered under action of the air filter 300. Because the cleaning apparatus 400 includes a first motor 420 and an eccentric structure 421 that is driven by the first motor 420, when dust removal needs to be performed on the air filter 300, the first motor 420 is started to drive the eccentric structure 421 to rotate, so as to generate eccentric vibration force. In addition, because the cleaning apparatus 400 is mounted on the air filter 300, the eccentric vibration force is easily transmitted to the air filter 300, so that the air filter 300 generates effective vibration, to shake off the dust 700 in the air filter 300. The shaken dust 700 and the garbage 600 are poured out together.

Optionally, the eccentric structure 421 may be designed as, but is not limited to, an eccentric wheel, an eccentric disk, an eccentric shaft, or another structure.

It needs to be noted that, the airflow generated by the second fan 520 can enter through the opening 511, and is blown onto the air filter 300. Refer to FIG. 12. An implementation may be that the air filter 300 is disposed between the opening 511 and the second fan 520.

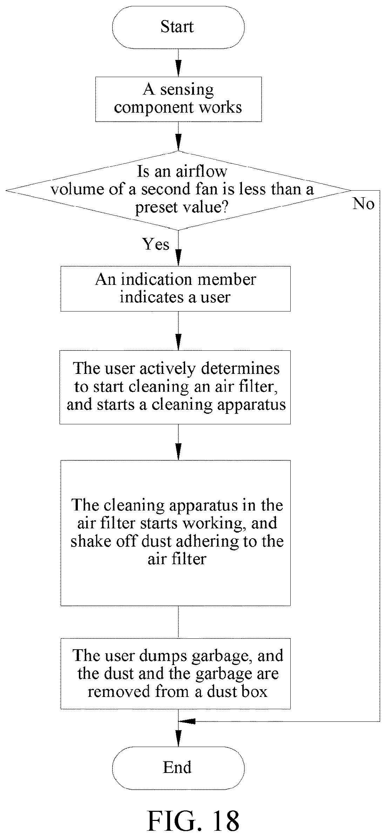

In one embodiment, refer to FIG. 12 and FIG. 18. The cleaner further includes a sensing component 530 disposed inside the outer shield 510. The sensing component 530 is configured to detect a flow rate of the airflow. When the flow rate of the airflow is less than a preset value, a reminding signal is sent. Refer to FIG. 18. It can be learned that, after the second fan 520 is started, the sensing component 530 detects the flow rate of the airflow in the outer shield 510, and performs determining with the preset value. When the detected flow rate of the airflow is less than the preset value, the reminding signal is sent, so that a user performs a dust removal operation on the air filter 300, thereby preventing the cleaner from being not capable of operating normally due to excessive dust accumulation in the air filter 300. Therefore, stable running of the cleaner is further ensured.

It needs to be noted that the reminding signal sent by the sensing component 530 may be an analog signal (for example, sound, light, or an action) that the user can directly receive, or may be a current or a voltage signal. A receiver of the signal is usually a controller or a terminal device (for example, a mobile App or a computer).

Further, refer to FIG. 14. The cleaner further includes an indicator 560, where the indicator 560 is electrically connected to the sensing component 530. The indicator 560 is configured to remind the user of whether dust removal is required.

Optionally, the indicator 560 may be an indicator light (such as an LED) or a buzzer.

In one embodiment, refer to FIG. 14. The cleaner further includes a power supply module 550. The power supply module 550 is disposed inside the outer shield 510 and is located on a side that is of the second fan 520 and that is away from the air filter 300. The power supply module 550 is configured to supply power to the second fan 520, the sensing component 530, the indicator 560, and the like.

In one embodiment, refer to FIG. 13. An accommodation cavity 311 is disposed inside the air filter 300 (where for example, the air filter 300 is of a tapered design). The first motor 420 is disposed inside the accommodation cavity 311. In this case, the eccentric vibration force on the first motor 420 is better transmitted to the air filter 300, so that a more stable vibration effect is generated on the air filter 300.

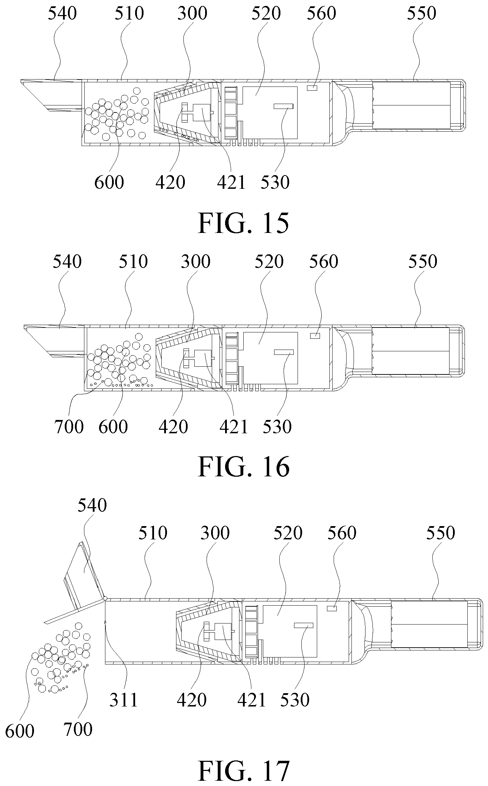

In one embodiment, refer to FIG. 17. The cleaner further includes a nozzle component 540. The nozzle component 540 is mounted on the outer shield 510 and can be opened, and is disposed in communication with the opening 511, so that the hand-held vacuum cleaner 500 can be better gather force by using the nozzle component 540. Therefore, the garbage 600 is more easily drawn into the outer shield 510. Simultaneously, when the garbage 600 in the outer shield 510 accumulates to a certain amount, the opening 511 is exposed by removing the nozzle component 540, so that the garbage 600 is poured out from the opening 511.

Optionally, a manner in which the nozzle component 540 is mounted on the outer shield 510 may be, but is not limited to, rotary connection, clamping connection, threaded connection, or the like.

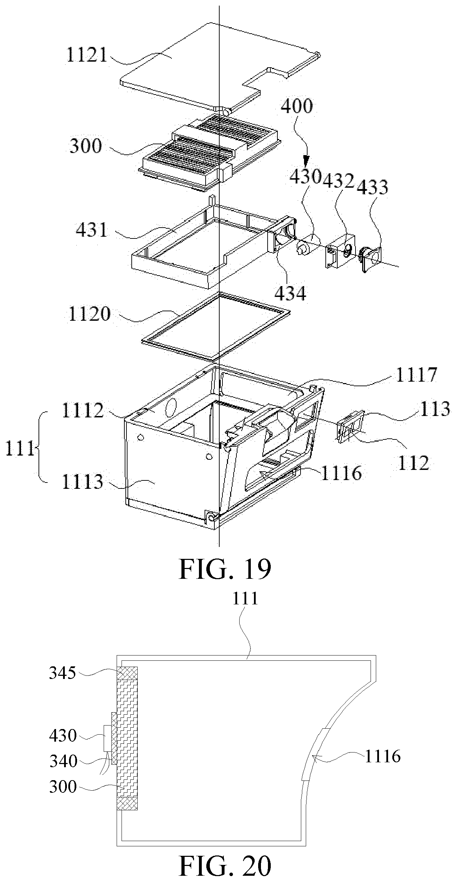

In one embodiment, refer to FIG. 3 and FIG. 19. The cleaner is a self-moving cleaning robot 100. The cleaning apparatus 400 is disposed inside the body 110, that is, the cleaning robot 100 has a self-dust-removal function. In this case, a dust removal process can be completed without assistance of an external device. In this way, an automation degree of a product is greatly improved. Certainly, the cleaning robot 100 may alternatively be used in combination with the base station 200. The cleaning apparatus 400 shakes the dust in the air filter 300 into the dust box 111, and then the garbage in the dust box 111 is collected to the base station 200 by the collecting apparatus.

It may be understood that the rolling brush is disposed at the bottom of the body. One end of a dust inlet air channel extends adjacent to the rolling brush, and the other end is connected to the dust inlet of the dust box, to cooperate with the rolling brush to guide the garbage swept by the rolling brush to the inside of the dust box 111. The air filter 300 and the dust inlet 1116 are disposed on both sides of the dust box. In this embodiment, the dust inlet 1116 and the air filter 300 are successively disposed in the front and the rear relative to the body 110, where the dust inlet 1116 is in the front and the air filter 300 is in the rear.

Further, refer to FIG. 19. The cleaning apparatus 400 includes a vibration motor 430. The vibration motor 430 is connected to the air filter 300 and transmits vibration generated by vibration motor 430 to the air filter 300. In this case, the vibration motor 430 is started and the vibration generated by the vibration motor 430 is transmitted to the air filter 300, so that the air filter 300 vibrates, to shake off the dust in the air filter 300. In addition, in this embodiment, a vibration bracket 431 is disposed inside the dust box 111. The air filter 300 is mounted inside the dust box 111 by using the vibration bracket 431. A motor mounting part 434 is further disposed inside the vibration bracket 431. The vibration motor 430 is mounted in the motor mounting part 434, and the vibration motor 430 is sealed in the motor mounting part 434 by using a vibration motor cover 432, so that dust does not enter the vibration motor 430. A wire collector 433 is further disposed in the motor mounting part 434, to collect a connecting wire of the vibration motor 430. An electrode plate 112 electrically connected to the connecting wire is disposed outside the wire collector 433, to supply power to the vibration motor 430. A heat insulation panel is further disposed between the dust box 111 and the electrode plate 112, to prevent heat generated by the vibration motor 430 from being transmitted to the dust box 111 and damaging the dust box 11.

Further, refer to FIG. 19. A sealing vibration absorber 1120 is disposed between the air filter 300 and the dust box 111. The sealing vibration absorber 1120 reduces vibration transmitted by the air filter 300 to the dust box 111 and prevents the airflow from flowing out of the dust box 111 without passing through the air filter 300. One end of the sealing vibration absorber 1120 is connected to the dust box 111, and the other end is directly connected to the air filter 300 or indirectly connected to the air filter 300 via the vibration bracket 431. In this way, on one hand, a part of the airflow carrying the dust is prevented from flowing outside an edge of the air filter 300 without passing through the air filter 300, and the dust in the part of the airflow is discharged to both outside air and the vibration motor 430. On the other hand, the sealing vibration absorber 1120 can reduce the vibration transmitted to the dust box 111 by the cleaning apparatus 400 or the vibration bracket 431, so that excessive vibration is not generated on the body 110. The sealing vibration absorber 1120 may be not only normal elastic rubber, but also a special-shaped structure with a Z-shaped cross section that is as shown in the figure. The special-shaped structure has better vibration damping performance.

Refer to FIG. 19. In addition, to facilitate mounting and dismounting of the air filter 300, when the air filter 300 is inside the dust box 111, the dust box 111 includes a first housing 1112, a second housing 1113, and a dust box top cover 1121 that can be opened through an operation. The first housing 1112 is detachably connected to the second housing 1113. The dust box top cover 1121 is connected to the first housing 1112 and can be turned open relative to the first housing 1112. Certainly, the dust box top cover 1121 can alternatively be opened relative to the dust box 111 in another manner. For example, the dust box top cover 1121 can be slid open or closed relative to the dust box 111. In this case, in a maintenance process, the dust box top cover 1121 can be opened to expose the air filter 300 inside the dust box 111, so as to facilitate an operation performed by maintenance personnel. The first housing 1112 is detachably connected to the second housing 1113 to facilitate the maintenance personnel to directly detach the first housing 1112 and the second housing 1113, and directly clean garbage in the second housing 1113. The flow inlet 1117 is disposed on the first housing 1112, and the dust inlet 1116 is disposed on the second housing 1113. Certainly, to improve air tightness of the dust box 111, a sealing member may be disposed between the first housing 1112 and the dust box top cover 1121, to prevent air leakage between the first housing 1112 and the dust box top cover 1121.

Optionally, the first housing 1112 and the second housing 1113 may be mounted through hinging, clamping, pinning, or the like.

In one embodiment, the cleaning apparatus 400 is disposed between the drawing apparatus and the air filter 300, and is located on a path through which the airflow flows. The cleaning apparatus 300 is disposed on a side on which the airflow flows outside the air filter 300. In this way, the dust in the airflow does not accumulates on the cleaning apparatus 300. In this embodiment, the vibration motor 430 is disposed between the air filter 300 and the flow inlet 1117. After being filtered by the air filter 300, the airflow carrying the dust passes through the vibration motor 430, and then blows outside the dust box 111 through the flow inlet 1117. In this way, no additional dustproof device needs to be disposed for the vibration motor 430, and the dust in the airflow does not accumulates on the vibration motor 430.

It should further be noted that the air filter 300 is distributed inside the dust box 111 in at least two manners. 1. The air filter 300 is located in the dust box 111 and between the dust inlet 1116 and the flow inlet 1117. 2. The air filter 300 is embedded in the flow inlet 1117, where the dust inlet 1116 and the flow inlet 1117 at disposed on the dust box 111 at intervals. The air filter 300 and the vibration motor 430 may both be disposed on an upper part of the dust box 111 in parallel, or the air filter 300 and the vibration motor 430 may both be disposed on a side part of the dust box 111 laterally. When the air filter 300 is embedded in the flow inlet 1117, the vibration motor 430 is disposed on the side on which the airflow flows outside the air filter 300.

In one embodiment, refer to FIG. 20. The cleaning apparatus 400 includes a vibration motor 430. The vibration motor 430 is connected to the air filter 300 via a first elastic apparatus 340, and vibration is transmitted to the air filter 300 via the first elastic apparatus 340. In this case, the vibration motor 430 is started and the vibration on the vibration motor 430 is transmitted to the air filter 300 via the first elastic apparatus 340, so that the air filter 300 vibrates, to shake off the dust in the air filter 300. In addition, in this embodiment, the vibration motor 430 is mounted on the air filter 300 via the first elastic apparatus 340, so that there is a cushioning effect, and the air filter 300 is not easily damaged due to direct contact between the vibration motor 430 and the air filter 300.

It needs to be noted that, the first elastic apparatus 340 may be made of a plurality of types of materials, provided that certain elasticity is satisfied. For example, the first elastic apparatus 340 is designed as elastic rubber or an elastic sponge. In addition, a manner in which the first elastic apparatus 340 is mounted on the air filter 300 may be, but is not limited to, bolting, clamping, bonding, or the like.

Further, refer to FIG. 20. The air filter 300 is mounted in the dust box 111 via a sixth elastic apparatus 345. When the vibration motor 430 is running, the vibration motor 430 can drive the sixth elastic apparatus 345 to deform, and the air filter 300 vibrates during deformation of the sixth elastic apparatus 345, to shake off the dust in the air filter 300.

Optionally, the sixth elastic apparatus 345 may be elastic rubber.

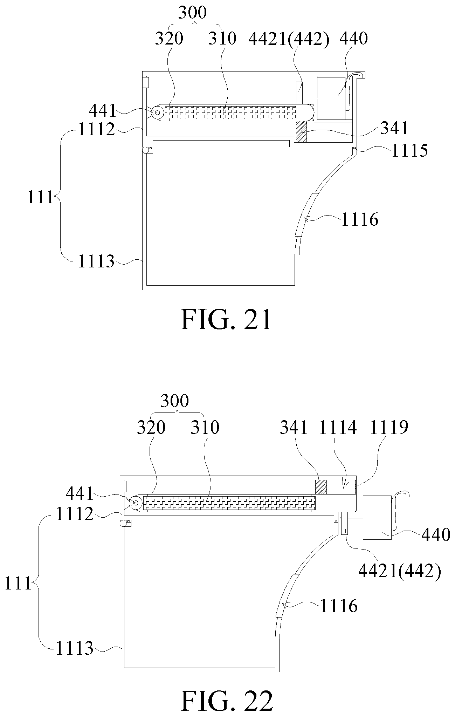

In another embodiment, refer to FIG. 21 to FIG. 23. The cleaning apparatus 400 includes a swinging member 441 a driving motor 440, and a driving component 442. One end of the air filter 300 is pivoted and connected to the dust box 111 via the swinging member 441, and the other end is connected to the dust box 111 via the second elastic apparatus 341. The driving motor 440 drives the driving component 442 to move. When the driving component 442 moves, the air filter 300 is driven to vibrate on the second elastic apparatus 341. It can be learned that, in a dust removal process, the driving motor 440 is started to drive the driving component 442 to move, so that the air filter 300 is driven by the driving component 442 to swing back and forth. Therefore, the air filter 300 vibrates on the second elastic apparatus 341, to ensure that the dust in the air filter 300 is stably shaken off.

Optionally, the second elastic apparatus 341 may be, but is not limited to, a spring, elastic rubber, an elastic metal sheet, or the like.

Further, refer to FIG. 21 and FIG. 22. The driving component 442 includes a cam 4421. The driving motor 440 drives the cam 4421 to rotate and act on the air filter 300, so that the second elastic apparatus 341 to which the air filter 300 is connected deforms. The air filter 300 vibrates when the second elastic apparatus 341 deforms. It can be learned that, in this embodiment, the cam 4421 is used to drive the air filter 300 to swing inside the dust box 111, so as to press the second elastic apparatus 341 to deform correspondingly. In this case, the air filter 300 vibrates inside the dust box 111 under interaction of the second elastic apparatus 341 and the cam 4421, so that the dust is effectively shaken off from the air filter 300.

Further, refer to FIG. 21. To make the second elastic apparatus 341 more easily deform, the air filter 300 includes a filter body 310 and a mounting housing 320. The filter body 310 is mounted on the mounting housing 320. One end of the mounting housing 320 is pivoted to the inner wall of the dust box 111, and the other end is connected to the dust box 111 via the second elastic apparatus 341. In this case, thrust force on the cam 4421 is transmitted to the second elastic apparatus 341 via the mounting housing 320, so that the second elastic apparatus 341 can stably deform.

In one embodiment, refer to FIG. 22. The dust box 111 includes a first housing 1112 and a second housing 1113 adapted to each other, and the first housing 1112 communicates with the second housing 1113. A notch 1114 is disposed on the first housing 1112. The air filter 300 is located inside the first housing 1112. One end of the air filter 300 is pivoted to the inner wall of the first housing 1112, and the other end abuts against the cam 4421 via the notch 1114, to cooperate with the cam 4421. The second elastic apparatus 341 is connected between an inner wall of the first housing 1112 and a side surface that is of the air filter 300 and that faces away from the cam 4421. In this way, the notch 1114 is used to facilitate the driving component 442 and the air filter 300 to cooperate with each other. In addition, the flow inlet 1117 is disposed on the first housing 1112, and the dust inlet 1116 is disposed on the second housing 1113.

It needs to be noted that the inner wall of the first housing 1112 has an upper side wall and a lower side wall that are disposed oppositely. The upper side wall and the lower side wall are respectively located on opposite sides of the air filter 300. In this case, the second elastic apparatus 341 may be disposed between the upper side wall and the air filter 300, or may be disposed between the lower side wall and the air filter 300. Certainly, the second elastic apparatus 341 may be disposed between both the upper side wall and the air filter 300 and the lower side wall and the air filter 300. When the second elastic apparatus 341 is disposed on only one side of the air filter 300, the driving motor 440 and the second elastic apparatus 341 are located on opposite sides of the air filter 300. For details, refer to FIG. 21 and FIG. 22.

Further, refer to FIG. 22. A sealing film 1119 (for example, a rubber film) having an elastic function may be connected between the inner wall of the first housing 1112 and the side surface that is of the air filter 300 and that faces away from the cam 4421, to avoid failure of air tightness in the first housing 1112 due to disposing of the notch 1114. When space for the vibration of the air filter 300 is satisfied, good air tightness in the first housing 1112 is ensured, so that the drawing apparatus can strongly drive the airflow to successively flow through the dust inlet 1116, the dust box 111, and the flow inlet 1117, thereby ensuring drawing force of the cleaner.

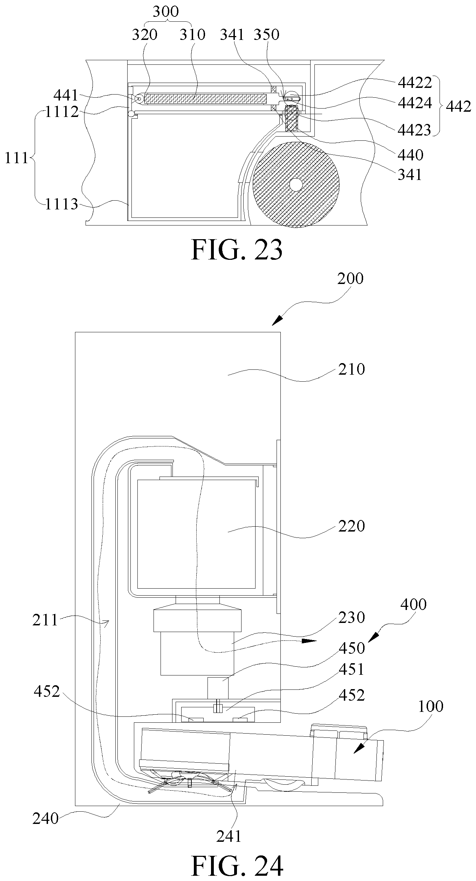

Certainly, in another embodiment, the second elastic apparatus 341 may alternatively be connected between both the opposite side surfaces of the air filter 300 and the inner walls of the first housing 1112. For details, refer to FIG. 23. In this case, the second elastic apparatus 341 needs to be elastic rubber.

In one embodiment, refer to FIG. 23. The driving component 442 includes a first gear 4422 and a second gear 4422 that is mounted inside the dust box 111 and that meshes with the first gear 4423. The driving motor 440 drives the first gear 4423 to rotate. The first gear 4423 drives the second gear 4422 to rotate. A sliding block 4424 is fixedly connected to the second gear 4422. A chute 350 corresponding to the sliding block 4424 is further disposed on an end that is of the air filter 300 and that is connected to the second elastic apparatus 341. The sliding block 4424 slides in the chute 350 to drive the air filter 300 to vibrate. It can be learned that, in this embodiment, a principle similar to that of a crank rocker mechanism is used. The driving motor 440 drives, under meshing action of the first gear 4422 and the second gear 4423, the sliding block 4424 to rotate about an axis of the second gear 4422. Because the sliding block 4424 is located in the chute 350, the rotating sliding block 4424 drives the air filter 300 to vibrate up and down in the chute 350, to shake off the dust adsorbed on the air filter 300.

Further, refer to FIG. 23. The chute 350 is disposed on the air filter 300 and extends along a length direction of the air filter 300, to form a waist-shaped groove structure, so that the sliding block 4424 can move relative to the chute 350, to avoid structure jamming during transmission.

Optionally, the cleaning apparatus 400 disposed on the cleaning robot 100 is also applicable to the hand-held vacuum cleaner 500.

In one embodiment, refer to FIG. 24. A base station 200 is provided. The base station is configured to at least collect garbage in a dust box 111 of a cleaning robot 100. The cleaning robot 100 includes an air filter 300. The air filter 300 is disposed inside the dust box 111. A cleaning apparatus 400 is disposed in the base station. The cleaning apparatus 400 can vibrate the air filter 300, to shake off dust in the air filter 300.

When a certain amount of dust is accumulated in the air filter 300 of the cleaning robot 100, the cleaning robot 100 moves to the base station 200, to cooperate with the base station 200. In this case, the air filter 300 is driven by the cleaning apparatus 400 in the base station 200 to vibrate, so as to shake off the dust in the air filter 300, so that a requirement of the air filter 300 for automatic dust removal is implemented, and a problem that an air volume of the cleaning robot decreases due to dust accumulation in the air filter 300 is effectively solved. Therefore, cleaning efficiency of the cleaning robot is ensured.

It needs to be noted that, that the cleaning robot 100 cooperates with the base station 200 should be understood as that when the cleaning robot 100 moves into the base station 200, ports between the cleaning robot 100 and the base station 20 needs to be aligned with each other, so that the garbage in the cleaning robot 100 can be collected to the base station 200. In addition, a structure of the cleaning apparatus 400 has a plurality of designs, provided that the cleaning apparatus 400 can drive the air filter 300 to vibrate.

Further, refer to FIG. 3 and FIG. 10. A dust collection port 1118 is disposed at the bottom of the dust box 111. The base station 200 further includes a first fan 230, a receiving box 220, a base 240, and a main frame 210 that is disposed on the base 240. The base 240 is for the cleaning robot 100 to be driven in, and a collection port 241 disposed relative to the dust collection port 1118 is disposed on the base 240. The receiving box 220 is mounted on the main frame 210. An air channel 211 is disposed on the main frame 210. One end of the air channel 211 communicates with the receiving box 220, and the other end extends into the base 240 and communicates with the collection port 241. The first fan 230 is configured to generate a collection airflow and drive the collection airflow to successively flow through the dust collection port 1118, the collection port 241, the air channel 211 and the receiving box 220. In this way, during central dust collection, the cleaning robot 100 is moved to the base 240, and the dust collection port 1118 corresponds to the collection port 241. The first fan 230 is started to generate the collection airflow, to successively draw the garbage in the dust box 111 from the dust collection port 1118, the collection port 241, and the air channel 211 into the receiving box 220, so as to implement centralized garbage management.

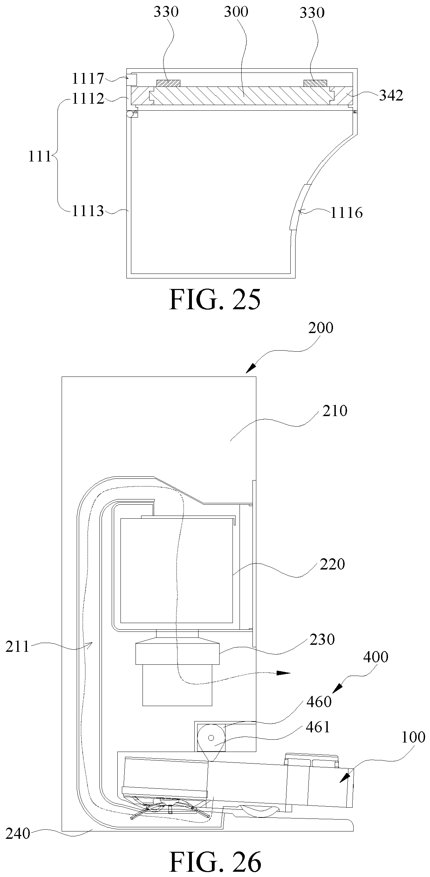

In one embodiment, refer to FIG. 24 and FIG. 25. The cleaning apparatus 400 includes a third motor 450 and a rotating member 451 that is driven by the third motor 450 to rotate. Two or more first magnetic members 452 are mounted on the rotating member 451 at intervals. A second magnetic member 330 corresponding to the first magnetic member 452 is mounted on the air filter 300. The first magnetic member 452 and the second magnetic member 330 attract and/or repel each other during rotation of the rotating member 451. The air filter 300 is mounted inside the dust box 111 via a third elastic apparatus 342. It can be learned that, when the cleaning robot 100 returns to the base station 200, the third motor 450 is started to drive the rotary member 451 to rotate the at least two first magnetic members 452. Because at least two second magnetic elements 330 are disposed on the air filter 300 at intervals, the rotating first magnetic element 452 intermittently cooperates (for example, attracts and/or repels) with the second magnetic element 330, and intermittently transmits magnetic force to the third elastic apparatus 342, so that the third elastic apparatus 342 to intermittently deform. Therefore, vibration is generated on the air filter 300, and the dust adsorbed on the air filter 300 is effectively shaken off.

It needs to be noted that, that the first magnetic element 452 and the second magnetic element 330 attract and/or repel each other may include at least the following understandings: all the first magnetic elements 452 and the corresponding second magnetic elements 330 attract or repel each other, that is, magnetic poles of the first magnetic elements 452 and the second magnetic elements 330 are the same or opposite. Alternatively, a part of the first magnetic elements 452 and corresponding second magnetic elements 330 attract each other, and the other part of the first magnetic elements 452 and corresponding second magnetic elements 330 repel each other, that is, magnetic poles of a part of the first magnetic elements 452 are the same as those of the second magnetic elements 330, and magnetic poles of the other part of the first magnetic elements 452 are opposite to those of the second magnetic elements 330. In addition, that the second magnetic member 330 is mounted in a manner corresponding to the first magnetic member 452 should be understood as that, during rotation, the first magnetic element 452 passes directly above the second magnetic element 330, and the first magnetic element 452 and the second magnetic element 330 attract and/or repel each other. For example, when the cleaning robot 100 moves to a dust collection working position, a distance between the first magnetic member 452 and an output shaft axis of the third motor 450 is equal to a distance between the second magnetic member 330 and the output shaft axis of the third motor 450. Certainly, if a quantity of the first magnetic elements 452 and a quantity of the second magnetic elements 330 are both two, a distance between the two first magnetic elements 452 is equal to a distance between the two second magnetic elements 330.

Optionally, the third elastic apparatus 342 may be, but is not limited to, elastic rubber, an elastic metal sheet, a spring, or the like.

In another embodiment, the cleaning apparatus 400 may further include an electric controller, and the first magnetic member 452 is an electromagnet. The electric controller is electrically connected to the first magnetic member 452, and controls the first magnetic member 452 to intermittently generate a magnetic field. In this way, a periodic current is introduced to the electric controller, so that the first magnetic member 452 generates an intermittent magnetic field. Therefore, the first magnetic member 452 intermittently attracts and/or repels the second magnetic member 330, so that the air filter 300 vibrates in the dust box 111. The electric controller can be a time relay or the like.

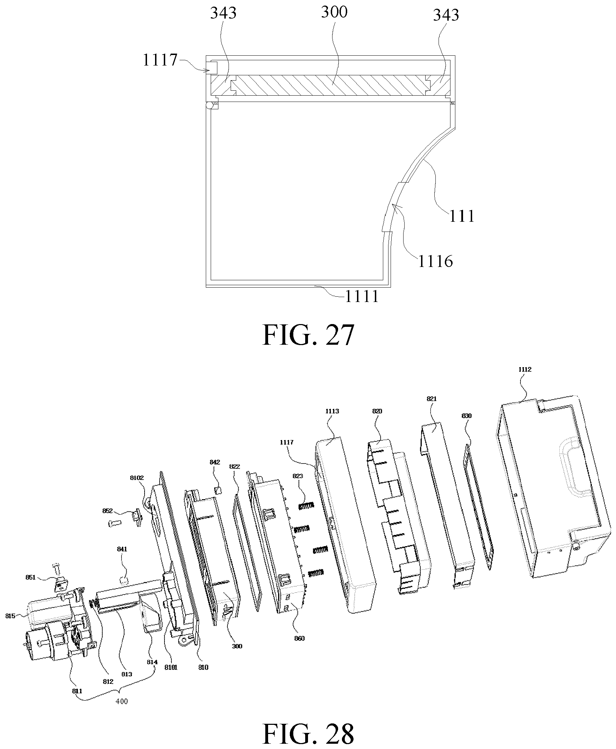

In another embodiment, refer to FIG. 26 and FIG. 27. The cleaning apparatus 400 includes a fourth motor 460 and a knocking structure 461 that is driven by the fourth motor 460 to rotate. The knocking structure 461 knocks on the dust box 111 when rotating. The air filter 300 is mounted inside the dust box 111 via a fourth elastic apparatus 343. Vibration generated when the knocking structure 461 knocks on the dust box 111 is transmitted to the air filter 300 via the fourth elastic apparatus 343. A damping device is disposed between the dust box 111 and the body. The damping device may be, for example, foam. When the cleaning robot 100 returns to the base station 200, the fourth motor 460 is started to drive the knock structure 461 to rotate, so that the knock structure 461 periodically knocks on the dust box 111. When the dust box 111 is knocked, the vibration generated by the dust box 111 is transmitted to the air filter 300 via the fourth elastic apparatus 343, so that the air filter 300 vibrates in the dust box 111. Therefore, the dust is removed from the air filter 300. The shaken dust is collected to the base station 200 together with the garbage in the dust box 111.

Optionally, the fourth elastic apparatus 343 may be, but is not limited to, elastic rubber, an elastic metal sheet, a spring, or the like.

Further, refer to FIG. 27. Foam 1111 is disposed at the bottom of the dust box 111, to reduce collection force between the dust box 111 and the body 110 and ensure structure stability of the dust box 111.

It needs to be noted that the knock structure 461 has a plurality of designs, provided that the knock structure 461 can rotate with the fourth motor 460 and knock on the air filter 300. For example, the knock structure 461 is designed as a cam structure, a connecting-rod structure, or a hammer-head structure.

In one embodiment, refer to FIG. 3 and FIG. 28 to FIG. 31. Similarly, the cleaner is the self-moving cleaning robot 100. The cleaning apparatus 400 is disposed inside the body 110 and the cleaning robot 100 has the self-dust-removal function. In this case, a dust removal process can be completed without assistance of an external device. In this way, an automation degree of a product is greatly improved. Certainly, the cleaning robot 100 may alternatively be used in combination with the base station 200. The cleaning apparatus 400 shakes the dust in the air filter 300 into the dust box 111, and then the garbage in the dust box 111 is collected to the base station 200 by the collecting apparatus.

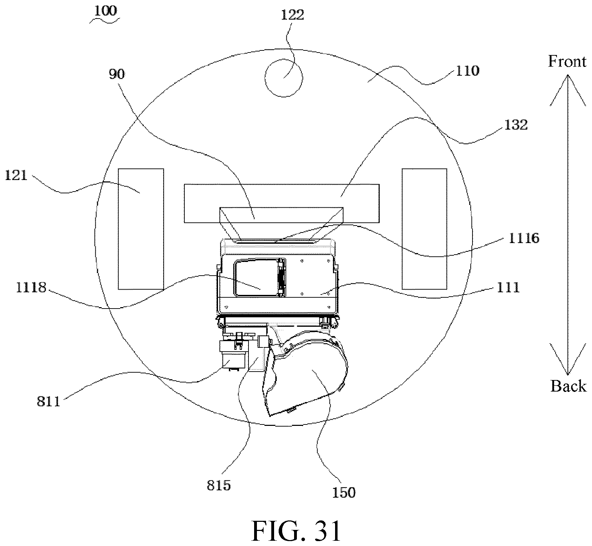

Refer to FIG. 31. The rolling brush 132 is disposed at the bottom of the body 110. One end of a dust inlet air channel 90 extends adjacent to the rolling brush 132, and the other end is connected to the dust inlet 1116 of the dust box 111, to cooperate with the rolling brush 132 to guide the garbage swept by the rolling brush 132 to the inside of the dust box 111. The air filter 300 and the dust inlet 1116 are relatively disposed on both sides of the dust box. In this embodiment, the dust inlet 1116 and the air filter 300 are successively disposed in the front and the rear relative to the body 110, where the dust inlet 1116 is in the front and the air filter 300 is in the rear. Preferably, the cleaning apparatus 400 and a third fan 150 are disposed behind the air filter, and overlap the dust box 111 in a height direction. In this way, the third fan 150 and the cleaning apparatus 400 do not occupying extra space in the height direction of the cleaning robot, to effectively reduce a height of the cleaning robot and help the cleaning robot enter low space.

Further, continue to refer to FIG. 28 and FIG. 29. The cleaning apparatus 400 includes a collision motor 811 and a collision component that is connected to the collision motor 811. The collision motor 811 drives at least a part of a structure of the collision component to move between an extended position and a retracted position. The collision component collides the air filter 300 when the collision component is at the extended position. The collision motor 811 drives the collision component to move back and forth between the extended position and the retracted position, so that the collision component continuously collides the air filter 300 and has a slapping function, thereby slapping the dust in the air filter 300.

Specifically, refer to FIG. 30. The collision component includes a collision block 813, a pushing member 814, and an elastic member 812. The pushing member 814 is connected to the collision motor 811 and driven by the collision motor 811 to rotate. The pushing member 814 is configured to push, when the pushing member 814 rotates, the collision block to move from the extended position to the retracted position. The elastic member 812 is configured to apply elastic force to the collision block when the collision block is at the retracted position, to push the collision block 813 out to the extended position. In this embodiment, the pushing member 814 includes a first surface 8141 away from the air filter 300 and a second surface 8142 adjacent to the air filter 300. The first surfaces 8141 are connected via a guide surface 8144 and a release surface 8143. The guide surface 8144 is set to an inclined surface with a gradient, and the release surface 8143 is set to perpendicular to the first surface 8141 and the second surface 8142. The collision block 813 has a driven surface 8132 that contacts the pushing member 814 and a collision surface 8131 that collides the air filter 300. Driven by the collision motor 811, the pushing member 814 rotates along a rotation direction D, and the driven surface 8132 of the collision block 813 climbs from the second surface 8142 of the pushing member 814 to the first surface 8141 along the guide surface 8144. Refer to FIG. 30b. In this case, the collision surface 8131 of the collision block 813 moves from the extended position to the retracted position. In this process, the elastic member 812 deforms to accumulate force for pushing out the collision block 813. When the driven surface 8132 climbs to the first surface 8141 and slides on the first surface 8141, the sliding block is restricted in the retracted position. Refer to FIG. 30a. Under continuous driving of the collision motor 811, the driven surface 8132 of the collision block 813 reaches the second surface 8142 from the first surface 8141 along the release surface 8143. Because the release surface 8143 is set to perpendicular to the first surface 8141 and the second surface 8142, the release surface 8143 does not has a function of intercepting the driven surface 8132. The collision block 813 is pushed out by the elastic member 812, the driven surface 8132 rapidly moves to the second surface 8142, and the collision block 813 collides the air filter 300. The collision block 813 completes colliding the air filter 300 in the foregoing process and shakes off the dust in the air filter 300. In this embodiment, the elastic member 812 is set to a spring. In another embodiment, the elastic member may be of another elastic structure having an ability of deforming or restoring deformation, such as an elastic rope or elastic rubber.

It may be understood that more than two groups of a first surface 8141, a second surface 8142, a guide surface 8144, and a release surface 8143 that cooperate with each other may be disposed on the pushing member 814, to control frequency of colliding the air filter 300 by the collision block 813. In this embodiment, two groups of a first surface 8141, a second surface 8142, a guide surface 8144, and a release surface 8143 that cooperate with each other are disposed on the pushing member 814. In other words, when the pushing member 814 is driven by the collision motor 811 to rotate once, the collision block 813 can collide the air filter 300 twice. It can also be understood that the foregoing pushing member can alternatively be set to a cam structure. An outer circumferential surface of the cam structure contacts and cooperates with the collision block. When the collision motor drives the cam structure to rotate, the cam structure pushes the collision block from the extended position to the retracted position. Alternatively, the collision block is connected to a linear motor, and driven by the linear motor to reciprocate in a straight line, so as to collide the air filter.

In addition, in this embodiment, a filter mounting bracket 860 is disposed inside the dust box 111, and the air filter 300 is mounted inside the dust box 111 via the filter mounting bracket 860. Specifically, the air filter 300 is mounted on the flow inlet 1117 of the dust box. In this embodiment, the flow inlet 1117 of the dust box and the dust inlet 1116 of the dust box are disposed on two opposite sides of the dust box 111. A sealing vibration member 820 is disposed between the air filter 300 and the dust box 111. The sealing vibration member 820 can prevent the airflow from flowing outside the dust box 111 without passing through the air filter 300. One end of the sealing vibration member 820 is connected to the dust box 111 and the other end is directly connected to the air filter 300 or indirectly connected to the air filter 300 via the filter mounting bracket 860. In this way, on one hand, a part of the airflow carrying the dust is prevented from flowing outside an edge of the air filter 300 without passing through the air filter 300, and the dust in the part of the airflow is discharged to outside air, and discharged to the collision motor 811 and the collision component. On the other hand, the sealing vibration absorber can move the air filter 300 away from the collision block 813 when the collision block 813 collides the air filter 300, to shake off the dust. The sealing vibration absorber can have a reliable sealing function when the air filter moves, and simultaneously have a cushioning effect to slow down the vibration from being continuously transmitted to the dust box 111. To enable the air filter 300 to rebound to an original position after being collided by the collision block 813, a spring 823 is disposed on the other side that is of the collision block 813 and that is relative to the air filter 300. In this embodiment, the sealing vibration member 820 is disposed between the dust box 111 and the filter mounting bracket 860, and an anti-clogging member 821 cooperating with the sealing vibration member 820 is further disposed inside the dust box 111. An empty groove is formed between the sealing vibration member and the dust box, and the empty groove exposes garbage inside. Therefore, the anti-clogging member 821 matching the empty groove is disposed to block the empty groove and avoid garbage clogging. Preferably, the sealing vibration member 820 and the anti-clogging member 821 are pressed against a filter bracket by using a pressure plate 830 connected to the filter mounting bracket 860. To further prevent the dust in the dust box 111 from escaping, a sealing strip 822 is disposed between the air filter 300 and the filter mounting bracket 860. Further preferably, the sealing strip 822, the sealing vibration member 820, and the anti-clogging member 821 may be rubber or foam that can deform.

Refer to FIG. 28. To facilitate mounting of the sealing vibration member 820, the dust box 111 includes a first housing 1112 and a second housing 1113 that are mutually adapted. After the sealing vibration member is mounted in the second housing, the first housing and the second housing are connected together. A connection between the first housing and the second housing may be set to a detachable connection, such as hinging, clamping, pinning, or the like, or may be set to a fixed connection. In this embodiment, the first housing and the second housing are fixedly connected together by using viscose, so that the dust and the airflow do not escape between the first housing and the second housing.

The cleaning apparatus includes a collision component mounting bracket 810, configured to mount the collision component at a position adjacent to the air filter 300. It can be understood that the collision motor and the collision component are disposed outside the dust box. The collision component mounting bracket 810 is disposed outside the dust box 111. Further, the collision component is also disposed outside the dust box 111 and on the other side that is of the air filter 300 and that is relative to the collision mounting frame, so that the dust in the dust box 111 and on the air filter 300 does not pollute the collision component. The cleaning apparatus further includes a collision component housing 815. The collision component housing 815 is used to mount the collision block 813 and the pushing member 814 on the collision component mounting bracket 810, and can also preventing dust from falling on the collision block 813 and the pushing member 814. Preferably, the collision component housing 815 is fixed to the collision component mounting bracket 810 by using a screw, and the collision motor 811 is fixed to the collision component mounting bracket 810 by using a screw. A collision through groove 8101 and a flow outlet 8102 are further disposed on the collision component mounting bracket 810. The collision through groove 8101 is configured to allow the collision block 813 to pass through and collide the air filter 300. The flow outlet 8102 is for the airflow to flow smoothly outside the dust box 111 through the air filter 300.

In addition, a filter position detection component and/or a collision block position detection module are further disposed inside the cleaning robot. The filter position detection component is configured to detect whether the air filter 300 is located in the dust box 111. The collision block position detection component is configured to detect whether the collision block 813 is in position. Specifically, the block position detection assembly includes a third magnetic member 841 and a first Hall element 851. The third magnetic member 841 is disposed on the collision block 813, and the first Hall element 851 is connected to the collision component housing 815. The first Hall element 851 determines, by detecting a sensing signal sent by the third magnetic member 841, whether the block 813 is in position. The filter position detection component includes a fourth magnetic member 842 and a second Hall element 852. The fourth magnetic member 842 is disposed on the air filter 300, and the second Hall element 852 is connected to the collision component mounting bracket 810. The second Hall element 852 determines, by detecting a sensing signal sent by the fourth magnetic member 841, whether the air filter 300 is in position. In descriptions of the present invention, it should be understood that orientation or position relationships indicated by the terms such as "center", "longitudinal", "transverse", "length", "width", "thickness", "on", "below", "front", "back", "left", "right", "vertical", "horizontal", "top", "bottom", "inside", "outside", "clockwise", "anticlockwise", "axial", "radial", and "circumferential" are based on orientation or position relationships shown in the accompanying drawings, and are used only for ease and brevity of illustration and description of the present invention, rather than indicating or implying that the mentioned apparatus or element must have a particular orientation or must be constructed and operated in a particular orientation. Therefore, such terms should not be construed as limiting of the present invention.

In addition, terms "first" and "second" are used merely for the purpose of description, and shall not be construed as indicating or implying relative importance or implying a quantity of indicated technical features. Therefore, a feature restricted by "first" or "second" may explicitly indicate or implicitly include at least one of such features. In descriptions of the present invention, unless explicitly specified, "a plurality" means at least two, for example, two or three.

In the present invention, it should be noted that unless otherwise explicitly specified and limited, the terms "mount", "connect", "connection", and "fix" should be understood in a broad sense. For example, a connection may be a fixed connection, a detachable connection, or an integral connection; or the connection may be a mechanical connection or an electrical connection; or the connection may be a direct connection, an indirect connection through an intermediary, or internal communication between two elements or mutual action relationship between two elements, unless otherwise specified explicitly. A person of ordinary skill in the art may understand the specific meanings of the foregoing terms in the present invention according to specific situations.

In the present invention, unless otherwise explicitly specified or defined, the first feature being located "above" or "below" the second feature may be the first feature being in a direct contact with the second feature, or the first feature being in an indirect contact with the second feature through an intermediary. In addition, that the first feature is "above", "over", or "on" the second feature may indicate that the first feature is directly above or obliquely above the second feature, or may merely indicate that the horizontal position of the first feature is higher than that of the second feature. That the first feature is "below", "under", and "beneath" the second feature may be that the first feature is right below the second feature or at an inclined bottom of the second feature, or may merely indicate that the horizontal position of the first feature is lower than that of the second feature.

It needs to be noted that, when an element is expressed as "being fixed to" another element, the element may be directly on the another element, or one or more intermediate elements may exist between the element and the another element. When one element is expressed as "being connected to" another element, the element may be directly connected to the another element, or intermediate possible the same time exist between the element and the another element. The terms "vertical", "horizontal", "left", "right", "inner", "outside", and similar expressions used in this specification are merely used for an illustrative purpose.

The technical features in the foregoing embodiments may be randomly combined. For concise description, not all possible combinations of the technical features in the embodiments are described. However, provided that combinations of the technical features do not conflict with each other, the combinations of the technical features are considered as falling within the scope described in this specification.

The foregoing embodiments only describe several implementations of the present invention, which are described specifically and in detail, but cannot be construed as a limitation to the patent scope of the present invention. It should be noted that for a person of ordinary skill in the art, several transformations and improvements can be made without departing from the idea of the present invention. These transformations and improvements belong to the protection scope of the present invention. Therefore, the protection scope of the patent of the present invention shall be subject to the appended claims.

## Claims

1. A cleaning system, wherein the cleaning system comprises:
a cleaning robot, comprising a body;
a drawing apparatus, disposed inside the body and configured to generate an airflow, to draw garbage on the ground on a traveling path of the cleaning robot;
a dust box, disposed inside the body and configured to collect the garbage, wherein the airflow flows through the dust box and is discharged outside the cleaning robot;
the cleaning system further comprises an air filter, disposed inside the dust box and configured to filter out dust in the airflow that is in the dust box and that is discharged outside the cleaning robot;
a cleaning apparatus, wherein the cleaning apparatus can vibrate the air filter to shake off the dust in the air filter; and
the cleaning system further comprises a base station for the cleaning robot to stop, wherein the base station comprises a collecting apparatus, and the collecting apparatus is docked with the dust box to collect the garbage in the dust box.

2. The cleaning system according to claim 1, wherein running duration of the cleaning apparatus at least partially coincides with running duration of the collecting apparatus.

3. The cleaning system according to claim 2, wherein the cleaning apparatus and the collecting apparatus are configured to be simultaneously started, and the cleaning apparatus and the collecting apparatus are shut down after preset duration.

4. The cleaning system according to claim 1, wherein the collecting apparatus is configured to be started after the cleaning apparatus is started for preset duration.

5. The cleaning system according to claim 1, wherein the cleaning apparatus is configured to be started after the collecting apparatus is started for preset duration.

6. The cleaning system according to claim 1, wherein docking detection units are respectively disposed on the cleaning robot and the base station, the docking detection unit is configured to detect whether a dust collection port of the dust box is successfully docked with a collection port of the base station, and when the dust collection port and the collection port are successfully docked, the collecting apparatus of the base station starts to collect the garbage in the dust box.

7. The cleaning system according to claim 6, wherein the docking detection units comprise electrode plates that are respectively disposed on the cleaning robot and the base station and that cooperate with each other, the electrode plates are further configured to charge the cleaning robot via the base station, and when the electrode plates of the cleaning robot and the base station are successfully docked, the collecting apparatus starts to collect the garbage in the dust box.

8. The cleaning system according to claim 7, wherein the cleaning robot is configured to return to the base station when completing a cleaning task, to enable the garbage in the dust box to be collected by the base station.

9. The cleaning system according to any one of claims 1 to 8, wherein the collecting apparatus is configured to generate a negative pressure in the base station to draw the garbage in the dust box into the base station, and a collection airflow formed by the negative pressure acts on the cleaning apparatus and drives the cleaning apparatus to move.

10. The cleaning system according to claim 9, wherein the collecting apparatus comprises a first fan, the first fan generates the collection airflow, the cleaning apparatus comprises a knocking apparatus disposed inside the dust box, the knocking apparatus comprises a knocking hammer, the knocking hammer can be driven by the collection airflow generated by the first fan and move between an initial position and a knocking position, and the knocking hammer knocks on the air filter when moving to the knocking position.

11. The cleaning system according to claim 1, wherein the cleaning apparatus is disposed inside the body.

12. The cleaning system according to claim 11, wherein the cleaning apparatus comprises a vibration motor, and the vibration motor is connected to the air filter and transmits vibration generated by vibration motor to the air filter.

13. The cleaning system according to claim 12, wherein a sealing vibration absorber is disposed between the air filter and the dust box, and the sealing vibration absorber reduces vibration transmitted by the air filter to the dust box and prevents the airflow from flowing out of the dust box without passing through the air filter.

14. The cleaning system according to claim 11, wherein the cleaning apparatus comprises a swinging member, a driving motor, and a driving component, one end of the air filter is pivoted and connected to the dust box via the swinging member, the other end is connected to the dust box via a second elastic apparatus, the driving motor drives the driving component to move, and movement of the driving component drives the air filter to generate vibration on the second elastic apparatus.

15. The cleaning system according to claim 11, wherein the cleaning apparatus comprises a collision motor and a collision component that is connected to the collision motor, the collision motor drives at least a part of a structure of the collision component to move between an extended position and a retracted position, and the collision component collides the air filter when the collision component is at the extended position.

16. The cleaning system according to claim 15, wherein the collision component comprises a collision block, a pushing member, and an elastic member, the pushing member is connected to the collision motor and driven by the collision motor to rotate, the pushing member is configured to push, when the pushing member rotates, the collision block to move from the extended position to the retracted position, and the elastic member is configured to apply elastic force to the collision block when the collision block is at the retracted position, to push the collision block out to the extended position.

17. The cleaning system according to claim 15, wherein the collision motor and the collision component are disposed outside the dust box.

18. The cleaning system according to claim 1, wherein the cleaning apparatus is disposed between the drawing apparatus and the air filter, and is located on a path through which the airflow flows.

19. A base station, wherein the base station is configured to at least collect garbage in a dust box of a cleaning robot, the cleaning robot comprises an air filter, the air filter is disposed inside the dust box, a cleaning apparatus is disposed in the base station, and the cleaning apparatus can vibrate the air filter to shake off dust in the air filter.

20. The base station according to claim 19, wherein the cleaning apparatus comprises a third motor and a rotation member that is driven by the third motor to rotate; more than two first magnetic members are mounted on the rotation member at intervals; a second magnetic member corresponding to the first magnetic member is mounted on the air filter; the first magnetic member and the second magnetic member attract and/or repel each other in a process in which the rotation member rotates; and the air filter is mounted inside the dust box via a third elastic apparatus.

21. The base station according to claim 19, wherein the cleaning apparatus comprises a fourth motor and a knocking structure that is driven by the fourth motor to rotate, the knocking structure knocks on the dust box when rotating, the air filter is mounted inside the dust box via a fourth elastic apparatus, and vibration generated when the knocking structure knocks on the dust box is transmitted to the air filter via the fourth elastic apparatus.
